# EUROPÄISCHE PATENTSCHRIFT

(11) **EP 1 287 596 B1**
(45) Veröffentlichungstag und Bekanntmachung des Hinweises auf die Patenterteilung: **28.07.2004**
(21) Anmeldenummer: 01940006.8
(22) Anmeldetag: 30.05.2001
(51) Int. Cl.: H02B 1/052

(54) **HALTEVORRICHTUNG FÜR HUTSCHIENEN**
RETAINING DEVICE FOR TOP HAT RAILS
DISPOSITIF DE RETENUE POUR UN PROFILE CHAPEAU

(30) Priorität: 07.06.2000 AT 9982000
(43) Veröffentlichungstag der Anmeldung: 05.03.2003
(73) Patentinhaber: Siemens AG Österreich, 1210 Wien (AT)
(72) Erfinder: HALBREINER, Erich, A-1200 Wien (AT); WEINMEIER, Harald, A-1210 Wien (AT)
(74) Vertreter: Matschnig, Franz, Dipl.-Ing.
(86) Internationale Anmeldenummer: PCT/AT2001/000175
(87) Internationale Veröffentlichungsnummer: WO 2001/095448

(56) Entgegenhaltungen:
- EP-A- 0 821 455
- DE-U- 7 426 836
- DE-U- 9 316 899

## Beschreibung

Die Erfindung betrifft ein elektronisches Gerät mit einer metallischen Rückwand, an der zumindest zwei Haltelaschen zur Befestigung des elektronischen Gerätes an einer Befestigungsscluene mit einem U-förmigen Profil und mit von den freien Enden der U-Schenkel nach außen umgebogenen Endabschnitten vorgesehen sind, wobei das Gerät mit den Haltelaschen in einen Endabschnitt einhängbar ist.

Zur Befestigung elektronischer Geräte in einem Schaltkasten oder ähnlichem ist dort für gewöhnlich eine Befestigungsschiene mit einem weitgehend U-förmigen Querschnitt vorgesehen, wobei die freien Enden zusätzlich nach außen gebogen sind, sodass sich ein hutförmiges Profil einstellt. Solche Befestigungsschienen - sogenannte Hutschienen - werden üblicherweise mit ihrem Rücken an einer Wand des Schaltkastens montiert, sodass ihre freien Enden übereinander zu liegen kommen und in den Schaltkasten ragen. Herkömmlicherweise besitzen die auf solche Schienen zu montierenden, elektronischen Geräte ein Gehäuse mit daran befestigten Haltevorrichtungen, beispielsweise Haltelaschen, die üblicherweise in das obere der beiden freien Enden eingehängt werden können.

Ein derartiges Gerät ist in der AT 406 725 beschrieben und weist ein Gehäuse sowie eine Rückwand auf, an der Haltehaken vorgesehen sind, um das Gehäuse an einer Hutschiene aufhängen zu können. Nachteilig kann dabei allerdings sein, dass die Stabilität dieser Befestigungsart, insbesondere in Bezug auf seitliches Verrutschen, nicht optimal ist. Weiters kann es in Folge der auftretenden Belastungen, beispielsweise bei der Demontage des Gerätes auf der Befestigungsschiene, zu einem Ausreißen der Haltehaken kommen.

Andere bekannte Haltevorrichtungen haben den Nachteil, dass sie nicht in das elektronische Gerät integriert sind, weshalb ihre Herstellung getrennt von der Herstellung des Gerätes erfolgt, wodurch zusätzliche Kosten entstehen. Eine derartige aus der DE 196 46 696 bekannte Haltevorrichtung ist als Aluminiumprofil ausgeführt und wird an dem Gehäuse des elektronischen Gerätes befestigt Dieses ein Halteteil für ein Gehäuse aus Blech, bestehend aus einem Abschnitt eines Metallprofils, ist derart profiliert, dass es an der einen Seite unmittelbar und elektrisch leitend mit einem Gehäuseboden verbindbar ist, und dass es an der gegenüberliegenden Seite mit einer Hinterschneidung versehen ist, mit der das Halteteil an einem Schenkel einer Befestigungsschiene einhängbar ist.

Die FR 2 508 782 beschreibt einen aus zusammenhängenden Faltausschnitten herstellbaren Verkaufsbehälter aus Karton, bestehend aus einem Boden, zwei mit dem Boden zusammenhängenden Seitenwänden, einer Rückwand und einer Vorderwand, wobei die Rückwand und die Vorderwand Verbindungslaschen aufweisen, die mit den Seitenwänden verklebbar sind, und mit im Eckbereich befindlichen Aufhängehaken. Die Aufhängehaken sind aus einem über die Rückwand vorstehenden hakenförmigen Fortsatz der Seitenwände gebildet

Die US 4 441 619 hat ein Werkzeughaltevorrichtung zum Inhalt, wobei eine Trageplatte vorgesehen ist, die Ausnehmungen zur Aufnahme von Laschen einer Aufhängevorrichtung aufweist. Die Laschen sind so geformt, dass sie abschnittsweise parallel zu der Oberfläche der Aufhängeplatten verlaufen. Weiters ist die Aufhängevorrichtung mit einer Schraube gegen die Trageplatte gesichert, um die Haltelaschen zu unterstützen.

Die US 5, 373, 421 bezieht sich auf eine Vorrichtung zur Montage von faseroptischen Empfängern mit einer Vorderwand, die eine Vielzahl an Öffnungen zur Aufnahme der Empfänger aufweist. Weiters sind Befestigungselemente vorgesehen, die zwei normal zu einem Basiselement verlaufende Seitenwände und eine Endwand aufweist, welche die Seitenwände um deren doppelte Höhe überragt. Die Seitenwände und die Endwand sind einstückig mit dem Basiselement ausgeführt. Der Endwand sind U-förmige Klammern zugeordnet, die mit ihrem Rücken an einer Wand befestigt sind. Die U-förmigen Klammern dienen zur Fixierung des faseroptischen Empfängers in dem Befestigungselement. Um den Empfänger besser an seiner Position zu halten, können an den freien Enden der U-förmigen Klammern Vorsprünge vorgesehen sein, welche seitlich gegen die Gehäuseoberfläche des Empfängers gepresst werden.

Die US 4, 671, 417 hat ein System zum Anbieten von vorverpackten Waren im Einzelhandel zum Gegenstand, wobei an einem Verkaufsständer Stangen zur Aufhängung bzw. Präsentation der Waren vorgesehen sind. Die Stangen sind an einem Ende mit einer Platte verbunden die mittels einer gebogenen Haltelasche so in den Verkaufsständer eingehängt ist, dass Waren auf den Stangen abnehmbar angebracht werden können.

Die EP 0 868 872 A1 beschreibt eine Vorrichtung zur Präsentation von Waren vor einer Rückwand, bestehend aus einer an der Rückwand befestigten Wandschiene und mehreren in die Wandschiene einklinkbaren, sich nach unten erstreckenden Vertikalstützen, wobei in der Wandschiene ein Schlitzraster mit einer Mehrzahl von in einer Linie angeordneten Rasterschlitzen vorhanden ist. In den Vertikalstützen ist ein Lochraster mit einer Mehrzahl von in einer Linie angeordneten Rasterlöchern vorhanden, wobei jede Vertikalstütze zuoberst einen Steckhaken mit einer zuvorderst angeordneten Kralle aufweist. Weiters sind Warenträger oder Dekorations- und Informationsobjekte vorgesehen, die mit ihren Konsolen in die Lochraster an den Vertikalstützen einhängbar sind.

Die US 5 613 791 hat einen Ordner zur Aufbewahrung von medizinischen Akten zum Inhalt. Der Ordner weist eine Aufhängevorrichtung auf, nut der er an einer Hutschiene verschiebbar aufgehängt werden kann.

Nachteilig an allen bekannten Haltvorrichtungen ist vor allem, dass mit ihnen bauartbedingt ein seitliches Verrutschen und ein Ausreißen der Haltlaschen unter Belastung nicht verhmdert werden kann.

Es ist daher eine Aufgabe der Erfindung, ein elektronisches Gerät mit einer Halterung zu schaffen, die ein seitliches Verrutschen des elektronischen Gerätes auf einer Befestigungsschiene verhindern und den auftretenden Belastungen standhalten kann und die aus Kostengründen m das elektronische Gerät integriert ist, wodurch sich auch die Herstellung vereinfachen lassen soll.

Diese Aufgabe wird mit einem elektronischen Gerät der eingangs genannten Art erfindungsgemäß dadurch gelöst, dass die Rückwand im Bereich zwischen zwei Haltelaschen zumindest einen oberen, sich nach außen wölbenden Vorsprung aufweist und die Haltelaschen einen ersten von der Rückwand weggebogenen Abschnitt und, in emem Abstand von der Rückwand, einen zweiten, von der Rückwand in einem flacheren Winkel als der erste Abschnitt weggebogenen Abschnitt aufweisen.

In einem montierten Zustand des Gerätes wird ein oberer Endbereich der Hutschiene zwischen dem oberen Vorsprung und einer von dem ersten und dem zweiten Abschnitt gebildeten Ecke erfindungsgemäß so eingeklemmt, dass ein Verrutschen oder Verkippen des Gerätes verhindert werden kann. Aufgrund der verbesserten Halteeigenschaften, ist es auch möglich, ein Ausreißen der Haltelaschen zu vermeiden.

Um ein Verdrehen des Gerätes zu verhindern, ist an der Rückwand zumindest ein unterer Vorsprung vorgesehen, der dem Stirnende des unteren Endabschnittes zugeordnet ist.

Die Montage eines Gerätes auf einer Hutschiene wird dadurch erleichtert, dass die Haltelaschen einen dritten Abschnitt aufweisen, der von der Rückwand in einem steileren Winkel weggebogen ist als der zweite Abschnitt.

Eine besonders gute Fixierung des elektronischen Gerätes an der Befestigungsschiene lässt sich dadurch erreichen, dass der obere Vorsprung im wesentlichen in dem Mittelbereich zwischen zwei Haltelaschen angeordnet ist.

Eine besonders kostengünstige Variante besteht darin, dass der zumindest eine obere Vorsprung und der zumindest eine untere Vorsprung aus der Rückwand herausgeprägt sind. Vorteilhafterweise sind die Haltelaschen aus der Rückwand herausgestanzt und abschnittsweise geprägt.

Die Erfindung samt weiteren Vorteilen wird im folgenden anhand eines Ausführungsbeispiels näher erläutert, das in der Zeichnung veranschaulicht ist. In dieser zeigen schematisch
Fig. 1 eine perspektivische Ansicht einer Rückwand eines erfindungsgemäßen elektronischen Gerätes;
Fig. 2 einen Schnitt entlang der Linie III-III in Fig. 1 mit eingehängter Hutschiene.

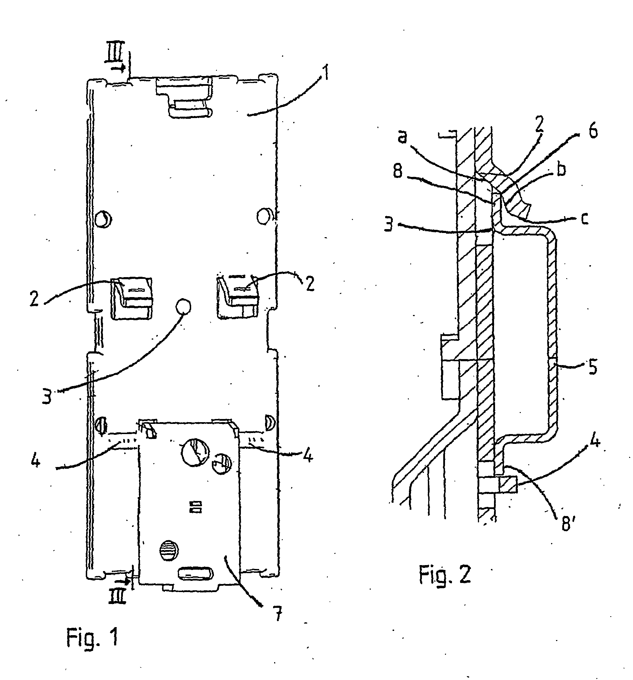

Gemäß Fig. 1 weist ein erfindungsgemäßes elektronisches Gerät eine Rückwand 1 mit zwei Haltelaschen 2, einen zwischen diesen angeordneten oberen Vorsprung 3 sowie zwei untere Vorsprünge 4 auf.

Zur Montage des Gerätes werden die beiden Haltelaschen 2 in einen oberen Endbereich 8 einer Befestigungsschiene 5, die in Fig. 2 dargestellt ist, eingehängt Die Montage des Gerätes wird dadurch erleichtert, dass im Bereich zwischen den unteren Vorsprüngen 4 ein Schieber 7 vorgesehen ist, mit dem die Rückwand 1 gegen die Befestigungsschiene 5 fixiert werden kann.

Um die Herstellung zu vereinfachen und dadurch die Kosten zu senken, sind die Haltelaschen 2 abschnittsweise aus der Oberfläche der Rückwand 1 herausgestanzt und von ihr weggebogen. Die Herstellung des oberen Vorsprunges 3 und der unteren Vorsprünge 4 kann durch Formstanzen erfolgen.

Nach Fig. 2 weist die Haltelasche 2 einen polygonalen Querschnitt auf, wobei ein erster, von der Rückwand 1 weggebogener Abschnitt a und im Anschluss daran ein zweiter, unter einem flacheren Winkel von der Rückwand 1 weggebogener Abschnitt b vorgesehen sind, sodass die beiden Abschnitte a, b eine Ecke 6 einschließen.

Der obere Vorsprung 3 dient dazu, wie schon eingangs erwähnt, im Zusammenwirken mit der Ecke 6 der Haltelaschen 2 das elektronische Gerät an der Befestigungsschiene 5 so zu fixieren, dass eine hohe Stabilität gegen seitliches Verrutschen und Verkippen erreicht wird. Der Vorsprung 3 kommt dabei mit dem oberen Endbereich 8 derart m Berührung, dass durch die zwischen den beiden Bauteilen auftretende Reibung ein Verschieben des Gerätes bezüglich der Befestigungsschiene 5 in Richtung ihrer Längserstreckung verhindert wird. Ein weiterer Vorteil dieser Ausführungsform besteht darin, dass die Fixierung des Gerätes an einer Hutschiene unabhängig von deren Blechstärke ist, da der obere Vorsprung 3 selbst bei einer geringen Blechstärke an der Hutschiene anliegt und auch in diesem Fall zusammen mit den Haltelaschen 2 eine ausreichende Klemmwirkung erzielt werden kann.

Im Anschluss an den Abschnitt b ist ein Abschnitt c vorgesehen, der unter einem steileren Winkel von der Rückwand 1 weggebogen ist als der Abschnitt b. Der Abschnitt c dient dazu die Montage des Gerätes zu erleichtern. In manchen Fällen kann es nämlich erforderlich sein, das Gerät beim Einhängen an der Befestigungsschiene 5 etwas zu kippen. Durch diese Maßnahme ist die Einführung eines Abschnittes einer Befestigungsschiene auch in gekippten Zustand möglich.

Bei einem Verkippen des Gerätes - was im wesentlichen einem Verdrehen des Gerätes um eine Achse parallel oder normal zur Längserstreckung der Befestigungsschiene 5 entspricht - werden die zwei unteren Vorsprünge 4 gegen die Stirnseite des unteren Endbereiches 8' gepresst, wodurch ein weiteres Verdrehen bzw. Verkippen unterbunden wird. Weiters kann von den zwei unteren Vorsprüngen 4 ein Teil der bei einem Verdrehen entstehenden Belastungen aufgenommen werden, wodurch die Haltelaschen 2 entlastet werden und ein Ausreißen der Haltelaschen 2 verhindert werden kann. Belastungen dieser Art können, wie eingangs erwähnt, beispielsweise bei der Demontage des Gerätes von der Befestigungsschiene 5 auftreten.

## Patentansprüche

1. Elektronisches Gerät mit einer metallischen Rückwand (1), an der zumindest zwei Haltelaschen (2) zur Befestigung des Gerätes an einer Befestigungsschiene (5) nut einem U-förmigen Profil und mit von den freien Enden der U-Schenkel nach außen umgebogenen Endabschnitten (8) vorgesehen sind, wobei das Gerät mit den Haltelaschen (2) in einen Endabschnitt (8) einhängbar ist, **dadurch gekennzeichnet, dass** die Rückwand (1) im Bereich zwischen zwei Haltelaschen (2) zumindest einen oberen, sich nach außen wölbenden Vorsprung (3) aufweist und die Haltelaschen einen ersten von der Rückwand (1) weggebogenen Abschnitt (a) und, in einem Abstand von der Rückwand (1), einen zweiten, von der Rückwand (1) in einem flacheren Winkel als der erste Abschnitt (a) weggebogenen Abschnitt (b) aufweisen.

2. Elektronisches Gerät nach Anspruch 1, **dadurch gekennzeichnet, dass** an der Rückwand (1) zumindest ein unterer, sich nach außen wölbender Vorsprung (4) vorgesehen ist, der dem Stirnende des unteren Endabschnittes (8') zugeordnet ist.

3. Elektronisches Gerät nach einem der Ansprüche 1 bis 2, **dadurch gekennzeichnet, dass** die Haltelaschen (2) einen dritten Abschnitt (c) aufweisen, der von der Rückwand (1) in einem steileren Winkel weggebogen ist als der zweite Abschnitt (b).

4. Elektronisches Gerät nach einem der Ansprüche 1 bis 3, **dadurch gekennzeichnet, dass** der obere Vorsprung (3) im wesentlichen in dem Mittelbereich zwischen zwei Haltelaschen (2) angeordnet ist

5. Elektronisches Gerät nach einem der Ansprüche 1 bis 4, **dadurch gekennzeichnet, dass** der zumindest eine obere Vorsprung (3) aus der Rückwand herausgeprägt ist.

6. Elektronisches Gerät nach einem der Ansprüche 1 bis 5, **dadurch gekennzeichnet, dass** der zumindest eine untere Vorsprung aus der Rückwand herausgeprägt ist.

7. Elektronisches Gerät nach einem der Ansprüche 1 bis 6, **dadurch gekennzeichnet, dass** die Haltelaschen aus der Rückwand herausgestanzt und abschnittsweise geprägt sind.

## Claims

1. An electronic device having a metallic rear wall (1) on which at least two retaining lugs (2) are provided for attachment of the device to a mounting rail (5) having a U-shaped profile and comprising end portions (8) bent outwardly away from the free ends of the legs of the U, which device can be suspended on one said end portion (8) by said retaining lugs (2), **characterized in that** the rear wall (1) has, in the area between two retaining lugs (2), at least one upper convex projection (3) and the retaining lugs have a first portion (a) bent away from the rear wall (1) and, at a distance from the rear wall (1), a second portion (b), bent away from the rear wall (1) at a less acute angle than the first portion (a).

2. An electronic device as defined in claim 1, **characterized in that** there is provided on the rear wall (1) at least one lower convex projection (4) which is assigned to the end face of said lower end portion (8').

3. An electronic device as defined in any one of claims 1 to 2, **characterized in that** the retaining lugs (2) have a third portion (c), which is bent away from the rear wall (1) at a more acute angle than the second portion (b).

4. An electronic device as defined in any one of claims 1 to 3, **characterized in that** the upper projection (3) is disposed substantially centrally between two retaining lugs (2).

5. An electronic device as defined in any one of claims 1 to 4, **characterized in that** the at least one upper projection (3) is embossed from the rear wall.

6. An electronic device as defined in any one of claims 1 to 5, **characterized in that** the at least one lower projection is embossed from the rear wall.

7. An electronic device as defined in any one of claims 1 to 6, **characterized in that** the retaining lugs are punched out from the rear wall and are embossed over specific areas.

## Revendications

1. Appareil électronique comportant une paroi arrière métallique (1), sur laquelle sont prévues au moins deux pattes de retenue (2) pour fixer l'appareil à un rail de fixation (5) possédant un profil en forme de U et des sections d'extrémité (8) qui sont repliées et recourbées vers l'extérieur à partir des extrémités libres des branches du U, l'appareil pouvant être accroché au moyen des pattes de retenue (2) dans une section d'extrémité (8), **caractérisé en ce que** la paroi arrière (1) comporte, dans la zone située entre deux pattes de retenue (2), au moins une partie saillante supérieure (3), qui est cintrée vers l'extérieur, et les pattes de retenue comportent un premier tronçon (a) coudé de manière à s'écarter de la paroi arrière (1) et, à une distance de la paroi arrière (1), un second tronçon (b), qui est coudé de manière à s'écarter de la paroi arrière (1) sous un angle inférieur à celui du premier tronçon (a).

2. Appareil électronique selon la revendication 1, **caractérisé en ce que** sur la paroi arrière (1) est prévue au moins une partie saillante inférieure (4), qui est cintrée vers l'extérieur et est associée à l'extrémité frontale de la section d'extrémité inférieure (8').

3. Appareil électronique selon l'une des revendications 1 et 2, **caractérisé en ce que** les pattes de retenue (2) possède un troisième tronçon (c), qui est coudé de manière à s'écarter de la paroi arrière (1) sous un angle supérieur à celui du second tronçon (b).

4. Appareil électronique selon l'une des revendications 1 à 3, **caractérisé en ce que** la partie saillante supérieure (3) est disposée essentiellement dans la zone centrale entre deux pattes de retenue (2).

5. Appareil électronique selon l'une des revendications 1 à 4, **caractérisé en ce qu'**au moins une partie saillante supérieure (3) est ressortie par gaufrage à partir de la paroi arrière.

6. Appareil électronique selon l'une des revendications 1 à 5, **caractérisé en ce qu'**au moins une partie saillante inférieure est ressortie par gaufrage à partir de la paroi arrière.

7. Appareil électronique selon l'une des revendications 1 à 6, **caractérisé en ce que** les pattes de retenue sont ressorties par découpage à partir de la paroi arrière et sont estampées par sections.
